# EUROPEAN PATENT APPLICATION

(11) **EP 4 542 159 A1**
(43) Date of publication of application: **23.04.2025**
(21) Application number: 23823614.5
(22) Date of filing: 22.05.2023
(51) Int. Cl.: F28D 9/00, F28F 3/08

(54) **STACKED STRUCTURE, AND HEAT-EXCHANGE-TYPE VENTILATION DEVICE AND AIR PURIFICATION DEVICE USING SAME**

(30) Priority: 15.06.2022 JP 2022096197
(71) Applicant: Panasonic Intellectual Property Management Co., Ltd., Kadoma-shi, Osaka 571-0057 (JP)
(72) Inventor: HONDA, Masato, Kadoma-shi, Osaka 571-0057 (JP); MIZUNO, Yuki, Kadoma-shi, Osaka 571-0057 (JP); YOSHIDA, Shinji, Kadoma-shi, Osaka 571-0057 (JP)
(74) Representative: Grünecker Patent- und Rechtsanwälte PartG mbB
(86) International application number: PCT/JP2023/018866
(87) International publication number: WO 2023/243313

(57) **Abstract**

Stacked structure (6) is formed by alternately stacking frames (14) and heat transfer plates (13) in an up-down direction. Frame (14) includes a pair of first sides (20) facing each other, end opening (21) provided at an end of frame (14) along first side (20), a pair of second sides (22) facing each other, and upper projection (23) and lower projection (24) provided at the end of frame (14) along second side (22). In end opening (21b) of second frame (14b), lower projection (24c) of third frame (14c) is fitted via second heat transfer plate (13b) adjacent on an upper side of second frame (14b), and upper projection (23a) of first frame (14a) is fitted via first heat transfer plate (13a) adjacent on a lower side of second frame (14b).

## Description

### TECHNICAL FIELD

The present disclosure relates to a stacked structure in which structures are stacked one by one and air ducts orthogonal to each other are formed every other layer, and a heat-exchange-type ventilation device and an air purification device using the same.

### BACKGROUND ART

A stacked structure (a structure in which rib structure and partition members are stacked) may be used as a heat exchange element that is used in a cold district or the like and exchanges heat between an exhaust air flow for exhausting an indoor air to an outside and a supply air flow for supplying an outdoor air to an inside. In this case, in order to improve sealability (sealing function for preventing air flowing through an air flow path from leaking to the outside) of the heat exchange element and secure reliability, for example, the following structure has been known.

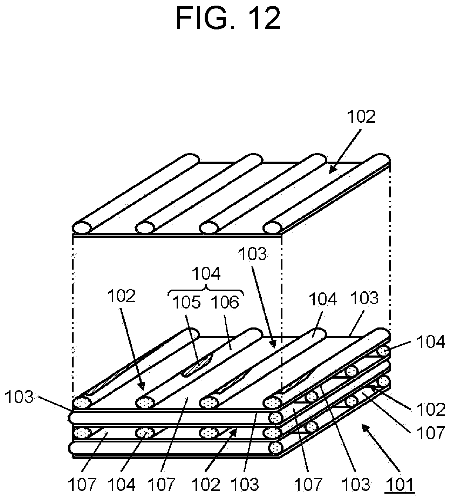

Fig. 12 is an exploded perspective view illustrating a structure of a heat exchange element in related art.

As illustrated in Fig. 12, heat exchange element 101 which is a stacked structure is formed by stacking a large number of single heat exchange elements 102 including functional papers 103 having heat conductivity and ribs 104. On one surface of functional paper 103, a plurality of ribs 104 including paper string 105 and hot melt resin 106 that bonds paper string 105 to functional paper 103 are provided in parallel at predetermined intervals. This rib 104 creates a gap between the pair of functional papers 103 stacked adjacent to each other, and thus, air flow paths 107 are formed.

Heat exchange element 101 is formed such that a plurality of gaps are formed to be stacked, and is configured such that air blowing directions of respective air flow paths 107 in adjacent gaps are orthogonal to each other. As a result, in air flow paths 107 provided between the plurality of stacked functional papers 103, the supply air flow and the exhaust air flow are alternately ventilated layer by layer, and heat exchange is performed between the supply air flow and the exhaust air flow.

### Citation List

### Patent Literature

PTL 1: Unexamined Japanese Patent Publication No. H11-248390

### SUMMARY OF THE INVENTION

In such heat exchange element 101 in the related art, ribs 104 are formed by covering paper string 105 having a substantially circular shape with hot melt resin 106, and intervals between functional papers 103 are maintained by ribs 104. However, in recent years, improvement in maintainability when the heat exchange element is installed in a heat-exchange-type ventilation fan has been regarded as important, and further improvement in element strength has been required for the heat exchange element. Specifically, the element strength of the heat exchange element is improved, and thus, it is required to prevent the heat exchange element from being deformed to cause peeling between the paper string and the functional paper even though an external force such as erroneous pressing with a hand is generated on a surface of the heat exchange element during maintenance.

The present disclosure solves the above-described problems in the related art, and provides a stacked structure in which peeling between a rib structure (paper string) and a partition member (functional paper) is suppressed at an outer peripheral portion and sealability is improved in a case where an external force is generated on an outer peripheral surface of the stacked structure, and a heat-exchange-type ventilation device and an air purification device using the stacked structure.

A stacked structure according to the present disclosure is a stacked structure including a plurality of rib structures, and a plurality of partition members. First air ducts and second air ducts intersecting with the first air ducts in a plan view are alternately provided one by one by alternately stacking each of the plurality of rib structures and each of the plurality of partition members in an up-down direction. The each of the plurality of rib structures includes a pair of first sides facing each other, an end opening provided at an end of the each of the plurality of rib structures along each of the pair of first sides, a pair of second sides facing each other, the second sides being different from the first sides, and an upper projection and a lower projection provided at the end of the each of the plurality of rib structures along each of the pair of second sides. The plurality of rib structures include a central rib structure, an upper rib structure adjacent to the central rib structure on an upper side of the central rib structure, and a lower rib structure adjacent to the central rib structure on a lower side of the central rib structure. At the end opening of the central rib structure, the lower projection of the upper rib structure is fitted via a partition member positioned on an upper side adjacent to the central rib structure among the plurality of partition members, and the upper projection of the lower rib structure is fitted via a partition member positioned on a lower side adjacent to the central rib structure among the plurality of partition members.

In addition, a heat-exchange-type ventilation device according to the present disclosure includes the above-described stacked structure as a heat exchange element.

In addition, an air purification device according to the present disclosure includes the above-described stacked structure as a carbon dioxide separation element.

According to the present disclosure, it is possible to obtain the stacked structure in which the peeling between the rib structure and the partition member is suppressed at the outer peripheral portion and sealability is improved in a case where the external force is generated on the outer peripheral surface of the stacked structure, and the heat-exchange-type ventilation device and the air purification device using the stacked structure.

### BRIEF DESCRIPTION OF THE DRAWINGS

Fig. 1 is a schematic view illustrating an installation state in a house of a heat-exchange-type ventilation device on which a stacked structure according to an exemplary embodiment of the present disclosure is mounted.
Fig. 2 is a schematic view illustrating a structure of the heat-exchange-type ventilation device in Fig. 1.
Fig. 3 is a perspective view illustrating the stacked structure mounted on the heat-exchange-type ventilation device in Fig. 2.
Fig. 4 is a perspective view of a frame constituting the stacked structure in Fig. 3.
Fig. 5 is a plan view and a sectional view of the frame constituting the stacked structure in Fig. 3.
Fig. 6 is a sectional view illustrating an end structure of the stacked structure in Fig. 3.
Fig. 7 is an exploded perspective view illustrating a method of assembling the stacked structure in Fig. 3.
Fig. 8 is a process diagram illustrating a procedure of assembling the stacked structure in Fig. 3.
Fig. 9 is a sectional view illustrating an end structure of the stacked structure in Fig. 3.
Fig. 10 is a process diagram illustrating a procedure of assembling the stacked structure in Fig. 3.
Fig. 11 is a perspective view illustrating the stacked structure used as a carbon dioxide separation element.
Fig. 12 is a perspective view of a heat exchange element in related art.

### DESCRIPTION OF EMBODIMENT

A stacked structure according to the present disclosure includes a plurality of rib structures, and a plurality of partition members. First air ducts and second air ducts intersecting with the first air ducts in a plan view are alternately provided one by one by alternately stacking each of the plurality of rib structures and each of the plurality of partition members in an up-down direction. The each of the plurality of rib structures includes a pair of first sides facing each other, an end opening provided at an end of the each of the plurality of rib structures along each of the pair of first sides, a pair of second sides facing each other, the second sides being different from the first sides, and an upper projection and a lower projection provided at the end of the each of the plurality of rib structures along each of the pair of second sides. The each of the plurality of rib structures includes a central rib structure, an upper rib structure adjacent to the central rib structure on an upper side of the central rib structure, and a lower rib structure adjacent to the central rib structure on a lower side of the central rib structure. At the end opening of the central rib structure, the lower projection of the upper rib structure is fitted via a partition member positioned on an upper side adjacent to the central rib structure among the plurality of partition members, and the upper projection of the lower rib structure is fitted via a partition member positioned on a lower side adjacent to the central rib structure among the plurality of partition members.

According to such a configuration, the upper projection of the lower rib structure and the lower projection of the upper rib structure are fitted to the end opening of the central rib structure, and thus, each of the partition members are caught in the upper projection and the lower projection. Thus, as compared with a case where the interval retaining member is fixed between the upper and lower partition members as in the related art, in a case where an external force is generated in one direction on the outer peripheral surface of the stacked structure (in particular, the interval retaining member disposed on the outer periphery), the partition member and the rib structure are less likely to be displaced from each other, and the partition member is less likely to be deformed by being protected by the rib structure. That is, the strength of the stacked structure can be increased. Therefore, in a case where the external force is generated on the outer peripheral surface of the stacked structure, it is possible to realize the stacked structure capable of suppressing peeling between the partition member and the rib structure at the outer peripheral portion and improving sealability.

In addition, in the stacked structure according to the present disclosure, the each of the plurality of rib structures may include an outer peripheral frame body including the first sides and the second sides, and a plurality of interval retaining members provided inside the outer peripheral frame body. The end opening, the upper projection, and the lower projection may be provided in the outer peripheral frame body. The plurality of interval retaining members may extend along the first sides so that predetermined intervals are provided between a partition member adjacent in an up direction and a partition member adjacent in a down direction among the plurality of partition members.

As a result, as compared with a configuration in which the interval retaining member is not provided, in the rib structure, it is difficult for the rib structure to be deformed in a case where the external force is generated in one direction on the outer peripheral surface of the stacked structure (particularly, the interval retaining member disposed on the outer periphery) by the plurality of interval retaining members provided inside the outer peripheral frame body. That is, the strength of the stacked structure can be increased.

In addition, in the stacked structure according to the present disclosure, the upper projection of the lower rib structure may be positioned outside the lower projection of the upper rib structure in a plan view in the end opening of the central rib structure.

By doing this, when the upper projection and the lower projection are fitted in the end opening, the partition member positioned on the upper side adjacent to the central rib structure and the partition member positioned on the lower side adjacent to the central rib structure are bent at the surface where the upper projection and the lower projection are in contact with each other. Thus, as compared with a case where only one of the upper projection and the lower projection is fitted to the end opening, it is possible to form a portion where the bent portions of the partition members overlap each other in a double manner. Therefore, the sealability of the stacked structure can be further improved.

In addition, in the stacked structure according to the present disclosure, each of four corner portions of the each of the plurality of rib structures may include a convex connection portion provided on one surface of the each of the plurality of rib structures, the convex connection portion protruding upward or downward from the one surface, and a concave connection portion provided on an other surface positioned on a side opposite to the one surface of the each of the plurality of rib structures, the concave connection portion being fitted to the convex connection portion of the rib structure adjacent to the each of the plurality of rib structures among the plurality of rib structures..

By doing this, since the convex connection portion of the rib structure is fitted to the concave connection portion of the rib structure adjacent to this rib structure, and the concave connection portion of the rib structure is fitted to the convex connection portion of another rib structure adjacent to this rib structure, the rib structure and the upper and lower rib structures adjacent to this rib structure can be reliably fixed.

In addition, in the stacked structure according to the present disclosure, the first air duct may be an exhaust air duct through which an exhaust air flow is distributed, the second air duct may be a supply air duct through which a supply air flow is distributed, the each of the plurality of partition members may be a member having heat conductivity, and the exhaust air flow and the supply air flow may be generated to exchange heat via the each of the plurality of partition members.

As a result, the strength on the outer peripheral surface is improved, and thus, the heat exchange element with improved sealability can be realized.

In addition, in the stacked structure according to the present disclosure, the first air duct may be an air duct through which an outdoor air is distributed, the second air duct may be an air duct through which an indoor air is distributed, the each of the plurality of partition members may be a member that selectively permeates carbon dioxide, and the carbon dioxide may be permeated from the air distributed through the second air duct to the air distributed through the first air duct via the each of the plurality of partition members.

As a result, the strength on the outer peripheral surface is improved, and thus, the carbon dioxide separation element with improved sealability can be realized.

In addition, a heat-exchange-type ventilation device according to the present disclosure includes the above-described stacked structure as a heat exchange element.

As a result, since the heat-exchange-type ventilation device capable of improving heat exchange efficiency can be realized and the strength on the outer peripheral surface of the heat exchange element is improved, maintainability of the heat-exchange-type ventilation device can be improved.

In addition, an air purification device according to the present disclosure includes the above-described stacked structure as a carbon dioxide separation element.

As a result, the air purification device with improved sealability can be realized.

Hereinafter, exemplary embodiments of the present disclosure will be described with reference to the drawings. Note that, the following exemplary embodiments are examples embodying the present disclosure, and do not limit the technical scope of the present disclosure. In addition, the drawings explained in the exemplary embodiments are schematic representations, and the ratios of the sizes and the thicknesses of the components in each of the drawings do not necessarily reflect the actual dimensional ratio.

### (Exemplary embodiments)

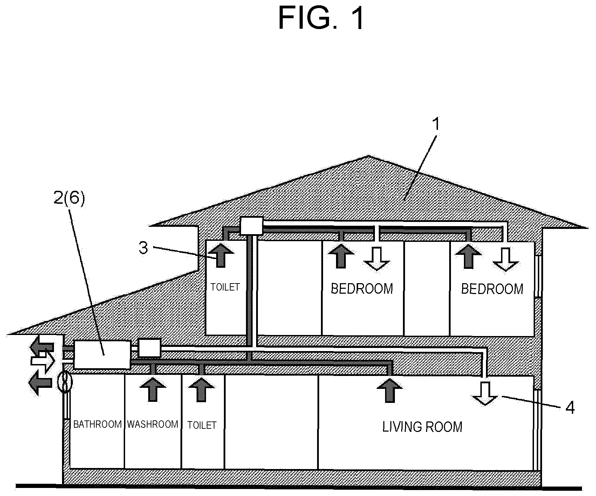

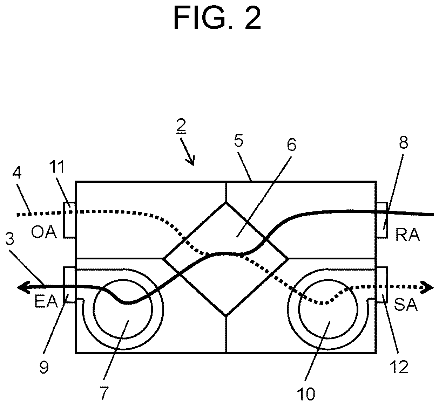

First, an outline of heat-exchange-type ventilation device 2 to which stacked structure 6 according to the exemplary embodiment of the present disclosure is applied as a heat exchange element will be described with reference to Figs. 1 and 2. Fig. 1 is a schematic view illustrating an installation example of heat-exchange-type ventilation device 2 on which stacked structure 6 according to the exemplary embodiment of the present disclosure is mounted. Fig. 2 is a schematic view illustrating a structure of heat-exchange-type ventilation device 2 in Fig. 1.

In Fig. 1, heat-exchange-type ventilation device 2 on which stacked structure 6 is mounted is installed inside house 1. Heat-exchange-type ventilation device 2 is a device that ventilates an indoor air and an outdoor air while exchanging heat.

As illustrated in Fig. 1, exhaust air flow 3 is released to an outside through heat-exchange-type ventilation device 2 as indicated by black arrows. Exhaust air flow 3 is a flow of air discharged from the inside to the outside. In addition, supply air flow 4 is taken indoors through heat-exchange-type ventilation device 2 as indicated by white arrows. Supply air flow 4 is a flow of air taken from the outside to the inside. For example, during winter in Japan, exhaust air flow 3 is 20°C to 25°C, whereas supply air flow 4 may reach below a freezing point. Heat-exchange-type ventilation device 2 performs ventilation, and transfers heat of exhaust air flow 3 to supply air flow 4 during ventilation to suppress release of unnecessary heat.

As illustrated in Fig. 2, heat-exchange-type ventilation device 2 includes body case 5, stacked structure 6 functioning as the heat exchange element, air exhaust fan 7, indoor air port 8, exhaust air port 9, air supply fan 10, outdoor air port 11, and supply air port 12.

Body case 5 is an outer frame of heat-exchange-type ventilation device 2. Indoor air port 8, exhaust air port 9, outdoor air port 11, and supply air port 12 are formed on an outer periphery of body case 5. Indoor air port 8 is a suction port through which exhaust air flow 3 is sucked into heat-exchange-type ventilation device 2. Exhaust air port 9 is an ejection port through which exhaust air flow 3 is ejected from heat-exchange-type ventilation device 2 to the outside. Outdoor air port 11 is a suction port through which supply air flow 4 is sucked into heat-exchange-type ventilation device 2. Supply air port 12 is an ejection port through which supply air flow 4 is ejected from heat-exchange-type ventilation device 2 to the inside.

Stacked structure 6, air exhaust fan 7, and air supply fan 10 are attached inside body case 5. Since stacked structure 6 is used as the heat exchange element, stacked structure 6 functions as a member for performing heat exchange between exhaust air flow 3 and supply air flow 4. Air exhaust fan 7 is an air blower that sucks exhaust air flow 3 from indoor air port 8 and ejects exhaust air flow 3 from exhaust air port 9. Air supply fan 10 is a blower that sucks supply air flow 4 from outdoor air port 11 and ejects supply air flow 4 from supply air port 12.

Exhaust air flow 3 sucked from indoor air port 8 by driving air exhaust fan 7 is discharged from exhaust air port 9 to the outside via stacked structure 6 and air exhaust fan 7. In addition, supply air flow 4 sucked from outdoor air port 11 by driving air supply fan 10 is supplied from supply air port 12 to the inside through stacked structure 6 and air supply fan 10.

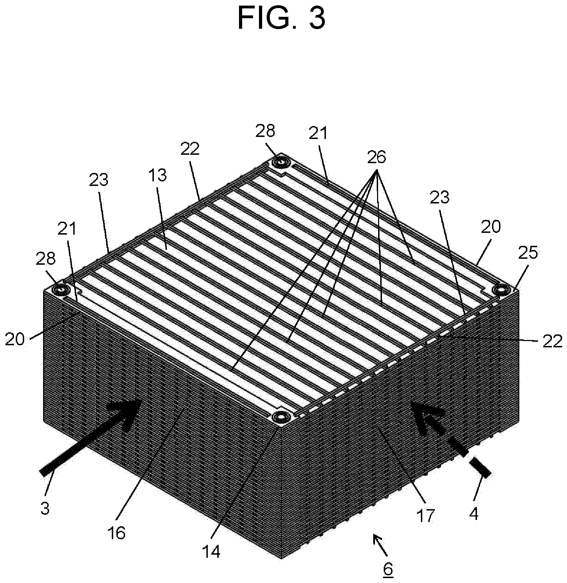

Next, stacked structure 6 used as the heat exchange element mounted on heat-exchange-type ventilation device 2 will be described with reference to Fig. 3. Fig. 3 is a perspective view illustrating stacked structure 6 mounted on heat-exchange-type ventilation device 2 in Fig. 2. Note that, in the following description, a stacking direction of stacked structure 6 is defined as a vertical up-down direction, but this direction does not necessarily indicate a direction in a state where stacked structure 6 is mounted on heat-exchange-type ventilation device 2.

As illustrated in Fig. 3, stacked structure 6 is a structure in which exhaust air ducts 16 and supply air ducts 17 intersecting with exhaust air ducts 16 are alternately formed one by one by alternately stacking frames 14 having a rectangular shape and heat transfer plates 13 having a rectangular shape in the up-down direction. More specifically, stacked structure 6 is formed by alternately and repeatedly stacking heat transfer plates 13 and frames 14 while fitting heat transfer plates 13 having a substantially square shape (including a square shape) from both upper and lower surfaces by ends of frame 14 having a substantially square shape (including a square shape).

When heat transfer plates 13 are fitted from both upper and lower surfaces by frames 14, frames 14 are orthogonally stacked to alternate one stage at a time. With such a configuration, exhaust air ducts 16 through which exhaust air flow 3 is ventilated and supply air ducts 17 through which supply air flow 4 is ventilated are alternately formed, and exhaust air flow 3 and supply air flow 4 flow orthogonally to each air duct. As a result, heat exchange between exhaust air duct 16 and supply air duct 17 is enabled. A detailed fitting method and procedure between heat transfer plates 13 and frames 14 will be described later. Note that, heat transfer plate 13 corresponds to a "partition member" in the claims, frame 14 corresponds to a "rib structure" in the claims, exhaust air duct 16 corresponds to a "first air duct" in the claims, and supply air duct 17 corresponds to a "second air duct" in the claims.

Heat transfer plate 13 is a plate-shaped member for performing heat exchange between exhaust air flow 3 and supply air flow 4 when exhaust air flow 3 and supply air flow 4 flow across heat transfer plate 13. Heat transfer plate 13 is made from heat transfer paper based on cellulose fiber, and has heat conductivity, moisture permeability, and moisture absorbency. However, the material of the paper is not limited thereto. For example, a moisture-permeable resin film based on polyurethane or polyethylene terephthalate, or a paper material based on cellulose fiber, ceramic fiber, or glass fiber may be used as heat transfer plate 13. A thin sheet having heat conductivity and having a property that gas does not permeate can be used as heat transfer plate 13. Note that, in the present exemplary embodiment, since heat transfer plate 13 is fitted and bent by frame 14, it is preferable to use a member having stretchability and strength that can withstand the bending.

Exhaust air duct 16 is an air duct through which exhaust air flow 3 is distributed. More specifically, exhaust air duct 16 is an air duct portion formed in stacked structure 6 among air ducts through which air discharged from the inside to the outside flows.

Supply air duct 17 is an air duct through which supply air flow 4 is distributed. More specifically, supply air duct 17 is an air duct portion formed in stacked structure 6 among air ducts through which air supplied from the outside to the inside flows.

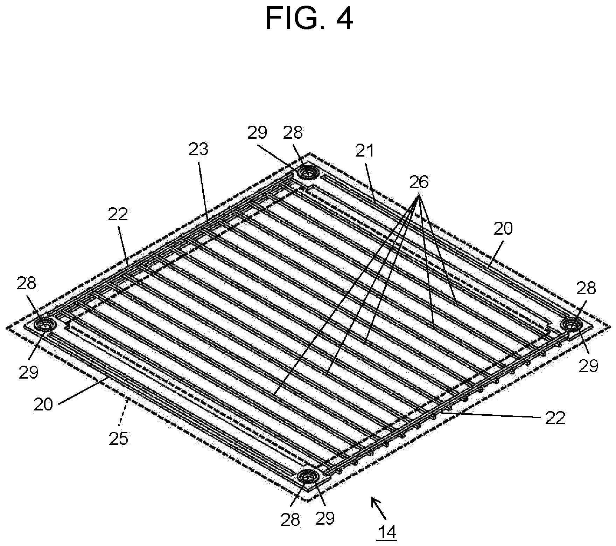

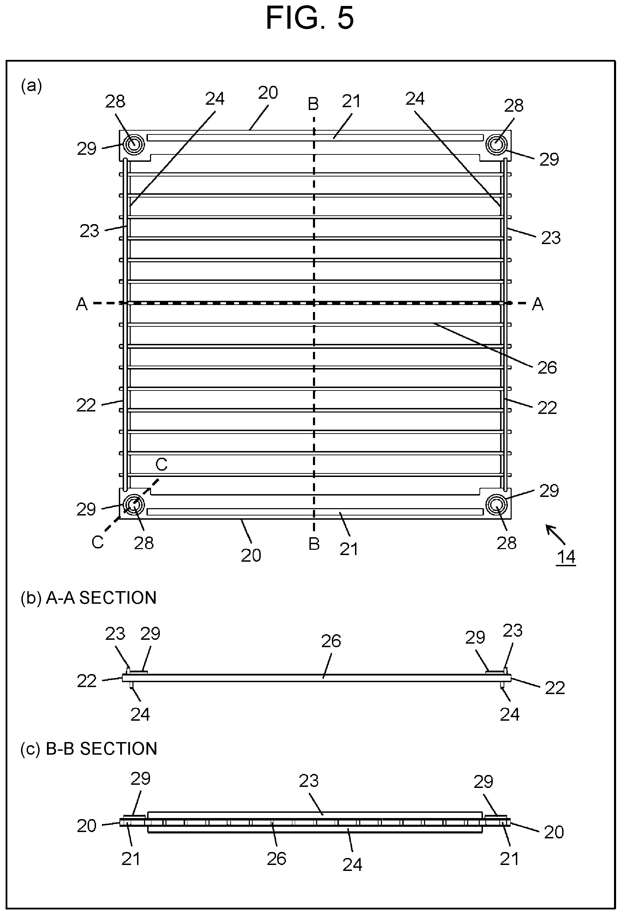

Next, frame 14 constituting stacked structure 6 will be described with reference to Figs. 4 and 5. Fig. 4 is a perspective view of frame 14 constituting stacked structure 6 in Fig. 3. Fig. 5 is a plan view and a sectional view of frame 14 constituting stacked structure 6 in Fig. 3. Note that, (a) of Fig. 5 is a plan view of frame 14 as viewed from the top, (b) of Fig. 5 is a side view of frame 14 in the A-A section in (a) of Fig. 5, and (c) of Fig. 5 is a side view of frame 14 in the B-B section in (a) of Fig. 5.

As illustrated in Fig. 4 and (a) of Fig. 5, frame 14 is the plate-shaped member having a substantially square shape (including a square shape). In frame 14, outlines of four sides of a substantially square (including a square) are defined by a pair of first sides 20 constituting sides facing each other of the substantially square and a pair of second sides 22 which are sides different from first sides 20 and constituting sides facing each other of the substantially square. Then, frame 14 includes outer peripheral frame body 25 having first side 20 and second side 22 and having an outer periphery in a substantially square shape (including a square shape), and a plurality of ribs 26 provided inside outer peripheral frame body 25.

Frame 14 is desirably made of a material having a certain strength. As the material of frame 14, for example, a resin member such as polypropylene, polyethylene, polyethylene terephthalate, or acrylonitrile butadiene styrene (ABS) can be used, a cellulose fiber, a ceramic fiber, or a glass fiber can be used, or a metal material such as aluminum or stainless steel can be used. Further, as a method of forming frame 14, it is preferable to use a forming method corresponding to a material such as molding, welding, or cutting.

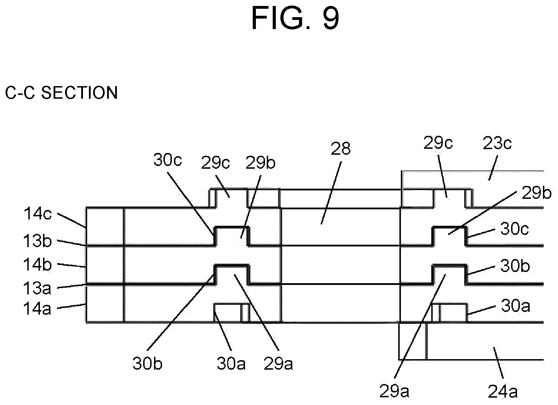

As illustrated in Figs. 4 and 5, end opening 21, upper projections 23, lower projections 24, through-holes 28, convex connection portions 29, and concave connection portions 30 (see Fig. 9) are provided in outer peripheral frame body 25. Details of each element will be described later.

The plurality of ribs 26 are members provided to have predetermined intervals from heat transfer plates 13 adjacent in the up-down direction in stacked structure 6. More specifically, as illustrated in (a) and (b) of Fig. 5, each of the plurality of ribs 26 is linearly formed from one second side 22 to the other second side 22 between the pair of second sides 22 facing heat transfer plate 13. The plurality of ribs 26 are provided side by side at predetermined intervals between adjacent ribs 26 in outer peripheral frame body 25. That is, it can also be said that the plurality of ribs 26 are provided to extend along first side 20 between second sides 22 while having predetermined intervals therebetween. Then, when heat transfer plates 13 are stacked, the plurality of ribs 26 form a gap between heat transfer plates 13 for allowing exhaust air flow 3 or supply air flow 4 to be ventilated, that is, exhaust air duct 16 or supply air duct 17. Note that, rib 26 corresponds to an "interval retaining member" in the claims.

As illustrated in (a) of Fig. 5, end opening 21 is an opening having a rectangular shape and provided at the end (outer peripheral frame body 25) of frame 14 along the pair of first sides 20 facing each other in the rectangular shape. End opening 21 is provided in each of the pair of first sides 20 of outer peripheral frame body 25. Each of the pair of end openings 21 is formed in a slit shape between one second side 22 and the other second side 22.

Although details will be described later, in stacked structure 6, lower projection 24 of frame 14 installed on an upper side and upper projection 23 of frame 14 installed on a lower side are fitted to end opening 21. Specifically, lower projection 24 of frame 14 positioned on the upper side is fitted to end opening 21 via heat transfer plate 13 positioned on an upper side, and upper projection 23 of frame 14 positioned on the lower side is fitted to the end opening 21 via heat transfer plate 13 positioned on a lower side. Note that, although it has been described that end opening 21 has a rectangular shape, four corners may have a curved shape.

As illustrated in (a) and (b) of Fig. 5, upper projection 23 is a member having a columnar shape and provided at the end of frame 14 (outer peripheral frame body 25) along each of the pair of second sides 22 facing each other in a rectangular shape. Upper projection 23 fixes respective ends of the plurality of ribs 26 on second sides 22 of outer peripheral frame body 25. Upper projection 23 is provided on each of the pair of second sides 22 of outer peripheral frame body 25. Note that, since upper projection 23 is installed to protrude upward in a vertical direction from a plane (upper surface) constituted by the plurality of ribs 26, upper projection 23 is referred to as the "upper projection".

As illustrated in (a) and (b) of Fig. 5, lower projection 24 is a member having a columnar shape and provided at the end of frame 14 (outer peripheral frame body 25) along each of the pair of second sides 22 facing each other in a rectangular shape. Lower projection 24 fixes the respective ends of the plurality of ribs 26 on second sides 22 of outer peripheral frame body 25. Lower projection 24 is provided on each of the pair of second sides 22 of outer peripheral frame body 25. Note that, since lower projection 24 is installed to protrude downward in the vertical direction from a plane (lower surface) constituted by the plurality of ribs 26, lower projection 24 is referred to as the "lower projection".

Here, as illustrated in (a) of Fig. 5, in a plan view of frame 14, lower projection 24 is installed at a position inside upper projection 23 such that upper projection 23 and lower projection 24 do not overlap each other on each of the pair of second sides 22. Note that, the amount of deviation between upper projection 23 and lower projection 24 is set in consideration of a thickness or the like of heat transfer plate 13 interposed when each of upper projection 23 and lower projection 24 is fitted to end opening 21. In addition, although it has been described that upper projection 23 and lower projection 24 have the columnar shape, the upper projection 23 and the lower projection 24 may have a shape in which corner portions are chamfered.

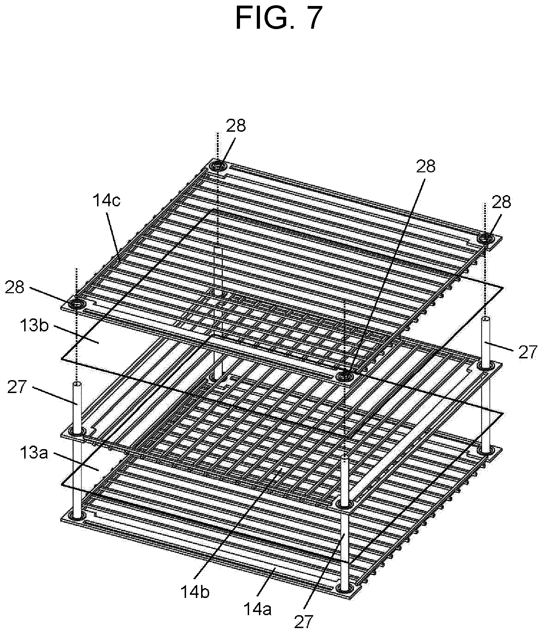

Through-hole 28 is an opening having a circular shape through which frame body fixing rod 27 (see Fig. 7) to be described later is inserted when stacked structure 6 is assembled by alternately stacking rectangular frames 14 and rectangular heat transfer plates 13 in the up-down direction. As illustrated in Fig. 4 and (a) of Fig. 5, through-holes 28 having the same shape are provided at four corners (four corner portions) of rectangular frame 14. In addition, convex connection portion 29 having a cylindrical shape and concave connection portion 30 (see Fig. 9) recessed in an annular shape are provided around through-hole 28 to surround through-hole 28.

As illustrated in Fig. 5, convex connection portions 29 are members having a cylindrical shape and provided at four corners (four corner portions) of rectangular frame 14. Convex connection portion 29 is formed in a convex shape on the upper side in the vertical direction from a plane (upper surface) formed by the plurality of ribs 26 to surround through-hole 28. Although details will be described later, convex connection portion 29 is fitted to concave connection portion 30 of frame 14 installed on the upper side in stacked structure 6. More specifically, convex connection portion 29 is fitted to concave connection portion 30 of frame 14 positioned on the upper side via heat transfer plate 13 positioned on the upper side.

Concave connection portions 30 are members recessed in an annular shape and provided at four corners (four corner portions) of rectangular frame 14. Concave connection portion 30 is formed in a concave shape on the upper side in the vertical direction from a plane (lower surface) constituted by the plurality of ribs 26 to surround through-hole 28. Although details will be described later, convex connection portion 29 of frame 14 installed on the lower side in stacked structure 6 is fitted to concave connection portion 30. More specifically, convex connection portion 29 of frame 14 positioned on the lower side is fitted to concave connection portion 30 via heat transfer plate 13 positioned on the lower side. Note that, a dimension of concave connection portion 30 is set in consideration of the thickness and the like of heat transfer plate 13 interposed when convex connection portion 29 is fitted.

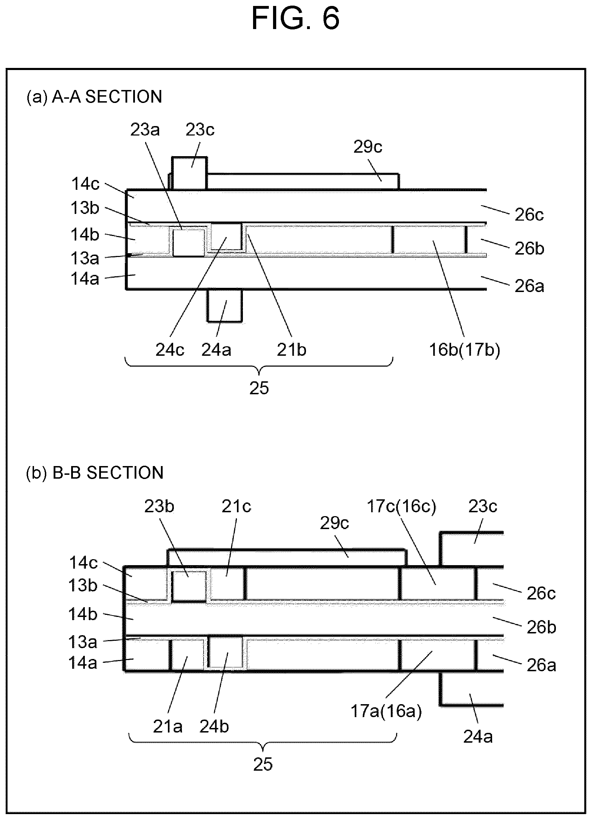

Next, a stacked state at an end of stacked structure 6 will be described with reference to Fig. 6. Fig. 6 is a sectional view illustrating an end structure of stacked structure 6 in Fig. 3. (a) of Fig. 6 is a side view of stacked structure 6 (for three layers of frames 14) in the A-A section in (a) of Fig. 5, and (b) of Fig. 6 is a side view of stacked structure 6 (for three layers of frames 14) in the B-B section in (a) of Fig. 5.

Note that, hereinafter, frames 14 for three layers are described as first frame 14a, second frame 14b, and third frame 14c from the lower side. In addition, heat transfer plate 13 positioned between first frame 14a and second frame 14b is described as first heat transfer plate 13a, and heat transfer plate 13 positioned between second frame 14b and third frame 14c is described as second heat transfer plate 13b. In addition, members constituting first frame 14a are denoted by "a" at an end of a reference mark, members constituting second frame 14b are denoted by "b" at the end of the reference mark, and members constituting third frame 14c are denoted by "c" at the end of the reference mark. Accordingly, the description will be made while the members are distinguished from each other. For example, lower projection 24 of first frame 14a is referred to as lower projection 24a, and upper projection 23 of third frame 14c is referred to as upper projection 23c. However, although the members are distinguished from each other, the members are the same and there is no difference.

In stacked structure 6, as illustrated in (a) of Fig. 6, upper projection 23a of first frame 14a positioned on the lower side is fitted to end opening 21b of second frame 14b via first heat transfer plate 13a, and lower projection 24c of third frame 14c positioned on the upper side is fitted to end opening 21b of second frame 14b via second heat transfer plate 13b. Note that, first frame 14a corresponds to a "lower rib structure" in the claims, second frame 14b corresponds to a "central rib structure" in the claims, and third frame 14c corresponds to an "upper rib structure" in the claims.

More specifically, upper projection 23a of first frame 14a is fitted to end opening 21b of second frame 14b while pushing first heat transfer plate 13a into end opening 21b of second frame 14b. On the other hand, lower projection 24c of third frame 14c is fitted to end opening 21b of second frame 14b while pushing second heat transfer plate 13b into end opening 21b of second frame 14b.

As a result, first heat transfer plate 13a is sandwiched between an upper surface of first frame 14a and a lower surface of second frame 14b, and is bent and fitted along the shape of upper projection 23a of first frame 14a in end opening 21b of second frame 14b.

On the other hand, second heat transfer plate 13b is sandwiched between an upper surface of second frame 14b and a lower surface of third frame 14c, and is bent and fitted along the shape of lower projection 24c of third frame 14c in end opening 21b of second frame 14b.

Then, as described above, when upper projection 23a and first heat transfer plate 13a are fitted into end opening 21b of second frame 14b and lower projection 24c and second heat transfer plate 13b are fitted into end opening 21b of second frame 14b, exhaust air duct 16b (or supply air duct 17b) is formed by rib 26b in an inner region of outer peripheral frame body 25.

In addition, in stacked structure 6, as illustrated in (b) of Fig. 6, lower projection 24b of second frame 14b positioned on the upper side is fitted to end opening 21a of first frame 14a via first heat transfer plate 13a. Although not particularly illustrated, as illustrated in end opening 21b in (a) of Fig. 6, upper projection 23 of another frame 14 positioned on the lower side is fitted to end opening 21a of first frame 14a via heat transfer plate 13.

On the other hand, upper projection 23b of second frame 14b positioned on the lower side is fitted to end opening 21c of third frame 14c via second heat transfer plate 13b. Although not particularly illustrated, lower projection 24 of another frame 14 positioned on the upper side is fitted to end opening 21c of third frame 14c via heat transfer plate 13 as illustrated in end opening 21b in (a) of Fig. 6.

Then, as described above, when the end structure such as end opening 21b of second frame 14b is formed in end opening 21a of first frame 14a, supply air duct 17a (or exhaust air duct 16a) is formed by rib 26a in the inner region of outer peripheral frame body 25. In addition, when the end structure such as end opening 21b of second frame 14b is formed in end opening 21c of third frame 14c, supply air duct 17c (or exhaust air duct 16c) is formed by rib 26c in the inner region of outer peripheral frame body 25.

As described above, in stacked structure 6, the end structures represented by end openings 21b of second frame 14b are alternately formed one by one on first side 20 side or second side 22 side with second frame 14b as a reference. In other words, in stacked structure 6, exhaust air duct 16 and supply air duct 17 are alternately formed one by one on first side 20 side and second side 22 side with second frame 14b as the reference.

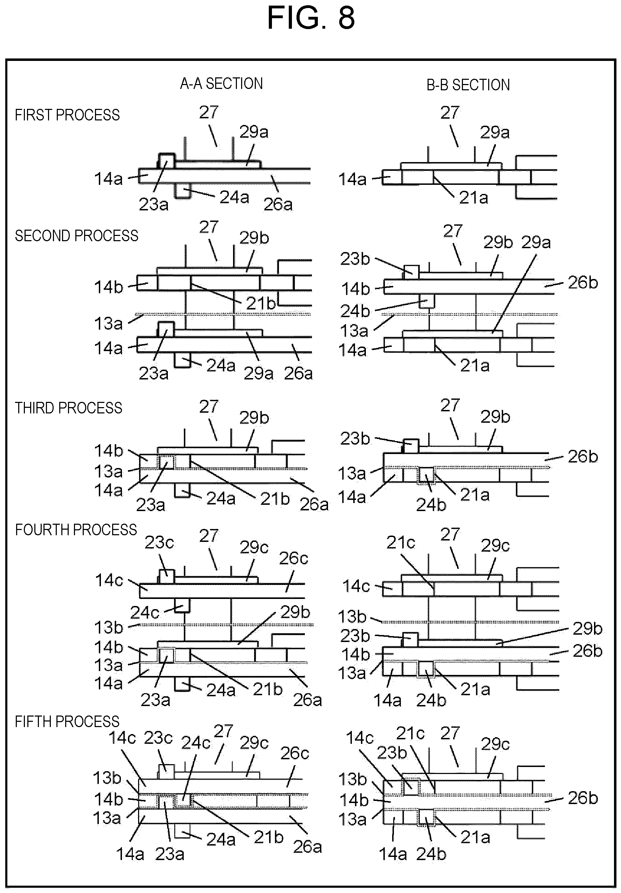

Next, a method and procedure of assembling stacked structure 6 will be described with reference to Figs. 7 and 8. Fig. 7 is an exploded perspective view illustrating the method of assembling stacked structure 6 in Fig. 3. Fig. 8 is a process diagram illustrating the procedure of assembling the stacked structure in Fig. 3. Note that, in Fig. 7, first heat transfer plate 13a and second heat transfer plate 13b are illustrated only by contour portions. Fig. 8 is a side view of stacked structure 6 in the A-A section and the B-B section in (a) of Fig. 5, and illustrates an assembly procedure for three layers of first frame 14a to third frame 14c in Fig. 6.

When stacked structure 6 is assembled, as illustrated in Fig. 7, four frame body fixing rods 27 that can be inserted into through-holes 28 at the respective positions of the four corner portions of frame 14 are prepared.

Frame body fixing rod 27 is a tool having a cylindrical shape and fixes outer peripheral frame body 25 of frame 14 and heat transfer plate 13. Frame body fixing rod 27 is also for suppressing positional deviation or deformation of frame 14 or the like when an external force is applied to corner portions or the like of stacked structure 6 during assembly. A sectional shape of frame body fixing rod 27 is preferably circular. In addition, as frame body fixing rod 27, various materials and shapes can be selected in accordance with a method of fixing stacked structure 6, such as a welding rod that can be melted or a metal rod of a full screw.

In the method of assembling stacked structure 6, as illustrated in Fig. 7, first, frame body fixing rods 27 are inserted into through-holes 28 at four corners of first frame 14a, respectively (corresponding to a first process in Fig. 8). Subsequently, first heat transfer plate 13a is placed on the upper surface of first frame 14a. At this time, a hole (opening) such as through-hole 28 may be provided in a portion of first heat transfer plate 13a corresponding to frame body fixing rod 27 as necessary. As a result, it is possible to suppress positional displacement of first heat transfer plate 13a, which is preferable.

Then, second frame 14b is placed on an upper surface of first heat transfer plate 13a. More specifically, in a state of being rotated by 90 degrees with respect to first frame 14a (in a state where rib 26a of first frame 14a and rib 26b of second frame 14b are orthogonal to each other), frame body fixing rods 27 are inserted into through-holes 28 at four corners of second frame 14b, respectively, and second frame 14b is installed to press first heat transfer plate 13a (corresponding to a third process in Fig. 8).

Subsequently, second heat transfer plate 13b is placed on the upper surface of second frame 14b. At this time, a hole (opening) such as through-hole 28 may be provided in a portion of second heat transfer plate 13b corresponding to frame body fixing rod 27 as necessary. As a result, it is possible to suppress positional displacement of second heat transfer plate 13b, which is preferable.

Then, third frame 14c is placed on an upper surface of second heat transfer plate 13b. More specifically, in a state of being rotated by 90 degrees with respect to second frame 14b (in a state where rib 26b of second frame 14b and rib 26c o third frame 14c are orthogonal to each other), frame body fixing rods 27 are inserted into through-holes 28 at four corners of third frame 14c, respectively, and third frame 14c is installed to press second heat transfer plate 13b (corresponding to a fifth process in Fig. 8).

Thereafter, heat transfer plates 13 and frames 14 are alternately stacked while frame body fixing rods 27 are inserted into four corners of heat transfer plates 13 and frames 14, and thus, stacked structure 6 illustrated in Fig. 3 is formed.

Next, the procedure of assembling stacked structure 6 will be specifically described by being divided into the first process to the fifth process with reference to Fig. 8.

In the first process in Fig. 8, frame body fixing rod 27 is inserted and fitted to each of through-holes 28 at four corners of first frame 14a.

The second process in Fig. 8 illustrates a scene in which frame body fixing rods 27 are being inserted and fitted to through-holes 28 at four corners of second frame 14b, respectively, while first heat transfer plate 13a is placed on the upper surface of first frame 14a from the state of the first process. At this time, upper projection 23a of first frame 14a in the A-A section is at a position overlapping an outer peripheral side of end opening 21a of second frame 14b in a plan view. End opening 21a of first frame 14a on the B-B section is at a position overlapping lower projection 24b of second frame 14b on an inner peripheral side in a plan view.

The A-A section in the third process in Fig. 8 illustrates a state where upper projection 23a of first frame 14a bends and pushes first heat transfer plate 13a into end opening 21b of second frame 14b and is fitted to end opening 21b of second frame 14b. The B-B section in the third process in Fig. 8 illustrates a state where lower projection 24b of second frame 14b bends and pushes first heat transfer plate 13a into end opening 21a of first frame 14a and is fitted to end opening 21a of first frame 14a.

As described above, first heat transfer plate 13a in the A-A section is sandwiched between the upper surface of first frame 14a and the lower surface of second frame 14b, and is bent and fitted along the shape of upper projection 23a of first frame 14a in end opening 21b of second frame 14b.

On the other hand, in end opening 21a of first frame 14a, lower projection 24b of second frame 14b bends and pushes first heat transfer plate 13a to be fitted. That is, first heat transfer plate 13a in the B-B section is sandwiched between the upper surface of first frame 14a and the lower surface of second frame 14b, and pushed out and bent by lower projection 24b.

The fourth process in Fig. 8 illustrates a scene in which frame body fixing rods 27 are being inserted and fitted to through-holes 28 at four corners of third frame 14c, respectively, while second heat transfer plate 13b is placed on the upper surface of second frame 14b from the state of the third process. At this time, end opening 21b of second frame 14b in the A-A section overlaps lower projection 24c of third frame 14c on the inner peripheral side in a plan view. Upper projection 23b of second frame 14b in the B-B section overlaps an outer peripheral side of end opening 21c of third frame 14c in a plan view.

The A-A section in the fifth process in Fig. 8 illustrates a state where lower projection 24c of third frame 14c bends and pushes second heat transfer plate 13b into end opening 21b of second frame 14b and is fitted to end opening 21b of second frame 14b. The B-B section in the fifth process in Fig. 8 illustrates a state where upper projection 23b of second frame 14b bends and pushes second heat transfer plate 13b into end opening 21c of third frame 14c and is fitted to end opening 21c of third frame 14c.

As described above, second heat transfer plate 13b in the A-A section is sandwiched between the upper surface of second frame 14b and the lower surface of third frame 14c, and is bent and fitted along the shape of lower projection 24c of third frame 14c in end opening 21b of second frame 14b.

On the other hand, in end opening 21c of third frame 14c, upper projection 23b of second frame 14b bends and pushes second heat transfer plate 13b to be fitted. That is, second heat transfer plate 13b in the B-B section is sandwiched between the upper surface of second frame 14b and the lower surface of third frame 14c, and pushed out and bent by upper projection 23b.

Thereafter, the second process to the fifth process are repeated, and thus, stacked structure 6 having a required stacking number is assembled.

Next, a fitting state between convex connection portions 29 and concave connection portions 30 in the plurality of frames 14 stacked in the up-down direction will be described with reference to Fig. 9. Fig. 9 is a sectional view illustrating the end structure of stacked structure 6 in Fig. 3. Note that, Fig. 9 is a side view of the end of stacked structure 6 (for three layers of frames 14) in the C-C section in (a) of Fig. 5, and reference marks of the members are assigned to correspond to the assignment of the reference marks in Fig. 6. For example, convex connection portion 29 of third frame 14c is referred to as convex connection portion 29c, and concave connection portion 30 of first frame 14a is referred to as concave connection portion 30a.

As illustrated in Fig. 9, convex connection portion 29a of first frame 14a is fitted to concave connection portion 30b of second frame 14b installed on the upper side in stacked structure 6. More specifically, convex connection portion 29a of first frame 14a is fitted to concave connection portion 30b of second frame 14b adjacent on the upper side via first heat transfer plate 13a adjacent on the upper side. At this time, first heat transfer plate 13a is fitted while being bent along the shapes of convex connection portion 29a and concave connection portion 30b.

Convex connection portion 29b of second frame 14b is fitted to concave connection portion 30c of third frame 14c installed on the upper side in stacked structure 6. More specifically, convex connection portion 29b of second frame 14b is fitted to concave connection portion 30c of third frame 14c adjacent on the upper side via second heat transfer plate 13b adjacent on the upper side. At this time, second heat transfer plate 13b is fitted while being bent along the shapes of convex connection portion 29b and concave connection portion 30c.

As described above, in stacked structure 6, the structure in which convex connection portion 29 of frame 14 and concave connection portion 30 of frame 14 adjacent thereto are fitted is formed in a cylindrical shape to surround through-hole 28.

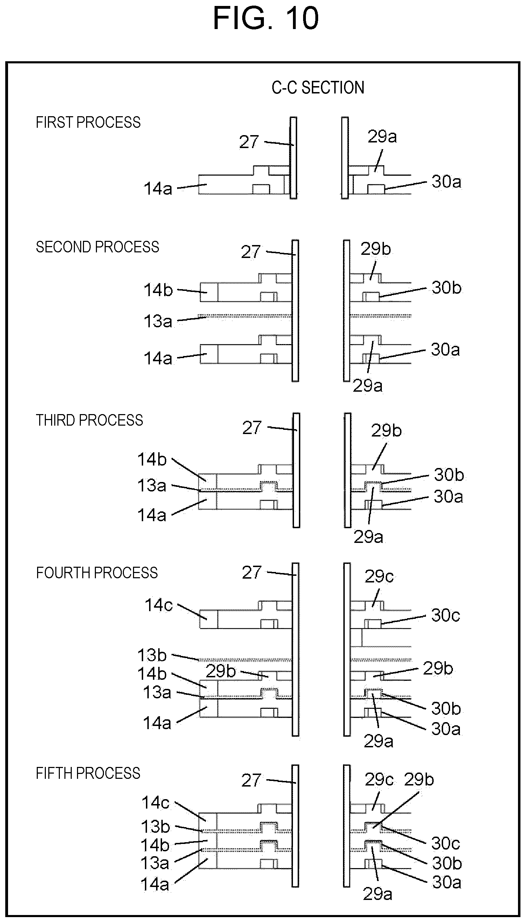

Next, a procedure of fitting convex connection portions 29 and concave connection portions 30 in the plurality of frames 14 will be described with reference to Fig. 10. Fig. 10 is a process diagram illustrating a procedure of assembling stacked structure 6 in Fig. 3. Note that, Fig. 10 illustrates an assembly procedure for three layers of first frame 14a to third frame 14c in Fig. 9, and a first process to a fifth process in Fig. 10 correspond to the first process to the fifth process in Fig. 8, respectively.

In the first process in Fig. 10, frame body fixing rods 27 are inserted and fitted to through-holes 28 at four corners of first frame 14a, respectively.

The second process in Fig. 10 illustrates a scene in which frame body fixing rods 27 are being inserted and fitted to through-holes 28 at four corners of second frame 14b, respectively, while first heat transfer plate 13a is placed on the upper surface of first frame 14a from the state of the first process. At this time, convex connection portion 29a of first frame 14a overlaps concave connection portion 30b of second frame 14b in a plan view.

The third process in Fig. 10 illustrates a state where convex connection portion 29a of first frame 14a is fitted to concave connection portion 30b of second frame 14b while pushing first heat transfer plate 13a into concave connection portion 30b of second frame 14b. As described above, first heat transfer plate 13a is sandwiched between the upper surface of first frame 14a and the lower surface of second frame 14b, and is bent and fitted along the shape of convex connection portion 29a of first frame 14a in concave connection portion 30b of second frame 14b.

The fourth process in Fig. 10 illustrates a scene in which frame body fixing rods 27 are being inserted and fitted to through-holes 28 at four corners of third frame 14c, respectively, while second heat transfer plate 13b is placed on the upper surface of second frame 14b from the state of the third process. At this time, convex connection portion 29b of second frame 14b overlaps concave connection portion 30c of third frame 14c in a plan view.

The fifth process in Fig. 10 illustrates a state where convex connection portion 29b of second frame 14b is fitted to concave connection portion 30c of third frame 14c while pushing second heat transfer plate 13b into concave connection portion 30c of third frame 14c. As described above, second heat transfer plate 13b is sandwiched between the upper surface of second frame 14b and the lower surface of third frame 14c, and is bent and fitted along the shape of convex connection portion 29b of second frame 14b in concave connection portion 30b of third frame 14c.

Thereafter, the second process to the fifth process are repeated, and thus, stacked structure 6 having a required stacking number is assembled.

As described above, since heat transfer plates 13 at four corners of stacked structure 6 are fitted to respective frames 14 in surface contact to be bent to form steps, it is possible to realize a structure in which air is trapped by the steps and air hardly enters through the gaps between heat transfer plates 13 and frames 14.

As described above, the end structures represented by end openings 21b of second frame 14b are alternately formed on first sides 20 or second sides 22 one by one to assemble stacked structure 6. In addition, convex connection portions 29 and concave connection portions 30 are fitted one by one at four corners of frame 14 near through-holes 28 to assemble stacked structure 6.

As described above, according to stacked structure 6 according to the present exemplary embodiment and heat-exchange-type ventilation device 2 using stacked structure 6 as the heat exchange element, the following effects can be obtained.
(1) In stacked structure 6, exhaust air ducts 16 and supply air ducts 17 intersecting with exhaust air ducts 16 in a plan view are alternately formed one by one by alternately stacking each of rectangular frames 14 and each of rectangular heat transfer plates 13 in the up-down direction. In stacked structure 6, frame 14 includes end opening 21 provided at the end of frame 14 along first sides 20 facing each other in the rectangular shape, and upper projection 23 and lower projection 24 provided at the end of frame 14 along second sides 22 different from first sides 20 and second sides 22 facing each other in the rectangular shape. Frames 14 are distinctively referred to as second frame 14b, third frame 14c adjacent to second frame 14b on the upper side of second frame 14b, and first frame 14a adjacent to second frame 14b on the lower side of second frame 14b. In this case, in end opening 21b of second frame 14b, lower projection 24c of third frame 14c is fitted via second heat transfer plate 13b positioned on the upper side adjacent to second frame 14b, and upper projection 23a of first frame 14a is fitted via first heat transfer plate 13a positioned on the lower side adjacent to second frame 14b.
   According to such a configuration, upper projection 23a of first frame 14a and lower projection 24c of third frame 14c are fitted to end opening 21b of second frame 14b, and thus, each of heat transfer plates 13 (first heat transfer plate 13a and second heat transfer plate 13b) is caught in upper projection 23 and lower projection 24. Thus, as compared with a case where rib 26 is fixed between upper and lower heat transfer plates 13 as in the related art, in a case where an external force is generated in one direction on an outer peripheral surface of stacked structure 6 (in particular, rib 26 disposed on an outer periphery), heat transfer plate 13 and frame 14 are less likely to be displaced from each other, and heat transfer plate 13 is less likely to be deformed by being protected by frame 14. That is, the strength of stacked structure 6 can be increased. Therefore, in a case where an external force is generated on the outer peripheral surface of stacked structure 6, it is possible to realize stacked structure 6 capable of suppressing peeling between heat transfer plate 13 and frame 14 at an outer peripheral portion and improving sealability.
(2) In stacked structure 6, upper projection 23a of first frame 14a and lower projection 24c of third frame 14c are fitted to end opening 21b of second frame 14b, and each of heat transfer plates 13 (first heat transfer plate 13a and second heat transfer plate 13b) is caught by upper projection 23 and lower projection 24. As a result, since heat transfer plates 13 are firmly fixed by three frames 14 in outer peripheral frame bodies 25 of frames 14, it is not necessary to fix between heat transfer plate 13 and rib 26 with an adhesive or the like. In other words, stacked structure 6 can be formed even with a combination of members in which it is difficult to fix between heat transfer plate 13 and rib 26 by using an adhesive.
(3) In stacked structure 6, frame 14 includes rectangular outer peripheral frame body 25 and the plurality of ribs 26 provided inside outer peripheral frame body 25. End opening 21, upper projection 23, and lower projection 24 are provided in outer peripheral frame body 25. The plurality of ribs 26 extend along first sides 20 such that the predetermined intervals are provided between the ribs and heat transfer plates 13 adjacent in the up-down direction. As a result, as compared with a configuration in which ribs 26 are not provided, in frame 14, it is difficult for frame 14 to be deformed in a case where an external force is generated in one direction on the outer peripheral surface of stacked structure 6 (particularly, ribs 26 disposed on the outer periphery) by the plurality of ribs 26 provided inside outer peripheral frame body 25. That is, the strength of stacked structure 6 can be increased.
(4) In stacked structure 6, upper projection 23a of first frame 14a is positioned outside lower projection 24c of third frame 14c in end opening 21b of second frame 14b. As a result, when upper projection 23 and lower projection 24 are fitted in end opening 21, second heat transfer plate 13b positioned on the upper side adjacent to second frame 14b and first heat transfer plate 13a positioned on the lower side adjacent to second frame 14b are bent at a surface where upper projection 23 and lower projection 24 are in contact with each other. Thus, as compared with a case where only one of upper projection 23 or lower projection 24 is fitted to end opening 21, it is possible to form a portion where the bent portions of heat transfer plates 13 (first heat transfer plate 13a and second heat transfer plate 13b) overlap each other in a double manner. Therefore, the sealability of stacked structure 6 can be further improved.
(5) In stacked structure 6, each of four corner portions of second frame 14b includes convex connection portion 29b provided on the upper surface of second frame 14b and protruding upward from the upper surface, and concave connection portion 30b provided on the lower surface positioned on a side opposite to the upper surface and fitted with convex connection portion 29a of first frame 14a adjacent to second frame 14b. As a result, convex connection portion 29b of second frame 14b is fitted to concave connection portion 30c of third frame 14c adjacent on the upper side of second frame 14b, and concave connection portion 30b of second frame 14b is fitted to convex connection portion 29a of first frame 14a adjacent on the lower side of second frame 14b. Thus, it is possible to reliably fix second frame 14b and upper and lower frames 14 (first frame 14a and third frame 14c) adjacent to second frame 14b.
(6) In stacked structure 6, one of the air ducts intersecting with each other in a plan view is exhaust air duct 16 through which exhaust air flow 3 is distributed, the other of the air ducts intersecting with each other in a plan view is supply air duct 17 through which supply air flow 4 is distributed, heat transfer plate 13 is a member having heat conductivity, and stacked structure 6 is used as the heat exchange element in which exhaust air flow 3 and supply air flow 4 exchange heat via heat transfer plate 13. As a result, the strength on the outer peripheral surface is improved, and thus, the heat exchange element with improved sealability can be realized.
(7) Stacked structure 6 is mounted as the heat exchange element on heat-exchange-type ventilation device 2. As a result, since heat-exchange-type ventilation device 2 capable of improving heat exchange efficiency can be realized and the strength on the outer peripheral surface of the heat exchange element is improved, maintainability of heat-exchange-type ventilation device 2 can be improved.

### (Modification)

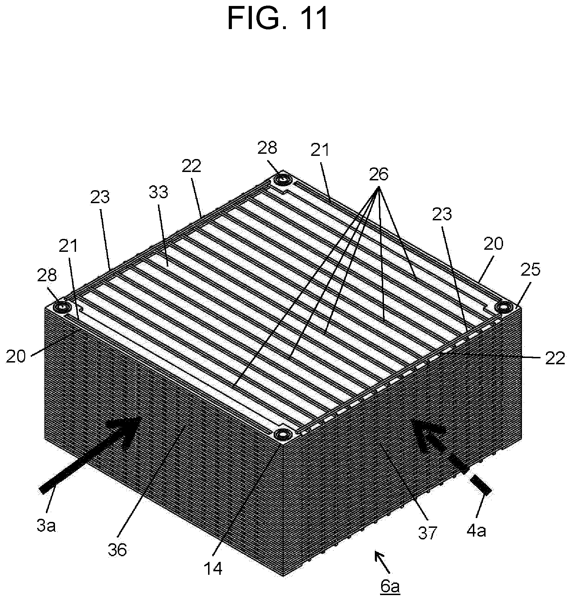

Next, a case where stacked structure 6a is used as a carbon dioxide separation element that selectively separates carbon dioxide from distributed air will be described as a modification with reference to Fig. 11. Fig. 11 is a perspective view illustrating stacked structure 6a used as the carbon dioxide separation element.

Stacked structure 6a according to the modification is different from the configuration of the exemplary embodiment in that "exhaust air ducts 16 through which exhaust air flow 3 is distributed" becomes "outdoor air ducts 36 through which outdoor air flow 3a is distributed", "supply air ducts 17 through which supply air flow 4 is distributed" becomes "indoor air ducts 37 through which indoor air flow 4a is distributed", and "heat transfer plates 13" becomes "carbon dioxide separation membranes 33". The other configurations of stacked structure 6a are similar to stacked structure 6 according to the exemplary embodiment. Hereinafter, description of the matters having been already described in the exemplary embodiment will be omitted as appropriate, and differences from the exemplary embodiment will be mainly described.

As illustrated in Fig. 11, stacked structure 6a is a structure in which outdoor air ducts 36 and indoor air ducts 37 intersecting with outdoor air ducts 36 are alternately formed one by one by alternately stacking frames 14 having a rectangular shape and carbon dioxide separation membranes 33 having a rectangular shape in an up-down direction.

More specifically, stacked structure 6a is formed by repeatedly stacking carbon dioxide separation membranes 33 and frames 14 while fitting carbon dioxide separation membranes 33 having a substantially square shape (including a square shape) at ends of frame 14 having a substantially square shape (including a square shape) from both upper and lower surfaces.

When carbon dioxide separation membranes 33 are fitted from both upper and lower surfaces by frames 14, frames 14 are orthogonally stacked to alternate one step at a time. With such a configuration, outdoor air ducts 36 through which outdoor air flow 3a is ventilated and indoor air ducts 37 through which indoor air flow 4a is ventilated are alternately formed, and in these air ducts, outdoor air flow 3a and indoor air flow 4a alternately flow orthogonally one by one. Thus, carbon dioxide can be selectively permeated and separated from indoor air flow 4a toward outdoor air flow 3a.

A fitting state and a fitting method of carbon dioxide separation membranes 33 and frames 14 are similar to the exemplary embodiment, and thus, the description thereof is omitted. Note that, carbon dioxide separation membrane 33 corresponds to "partition member" in the claims, outdoor air duct 36 corresponds to "first air duct" in the claims, and indoor air duct 37 corresponds to "second air duct" in the claims.

Outdoor air duct 36 is an air duct through which an outdoor air is distributed. More specifically, outdoor air duct 36 is an air duct portion formed in stacked structure 6a, among air ducts through which air (outdoor air), which is taken in from the outside, is distributed through the carbon dioxide separation element, and is discharged to the outside, flows.

Indoor air duct 37 is an air duct through which an indoor air is distributed. More specifically, indoor air duct 37 is an air duct portion formed in stacked structure 6a among air ducts through which air (indoor air), which is taken in from the inside, is distributed through the carbon dioxide separation element, and is released to the inside, flows.

Outdoor air flow 3a is a flow of air, which is taken in from the outside, is distributed through the carbon dioxide separation element, and is discharged to the outside.

Indoor air flow 4a is a flow of air, which is taken in from the inside, is distributed through the carbon dioxide separation element, and is released to the inside. Indoor air flow 4a can also be referred to as a circulating air flow.

Carbon dioxide separation membrane 33 is a member that selectively permeates and separates carbon dioxide from indoor air flow 4a toward outdoor air flow 3a when outdoor air flow 3a and indoor air flow 4a flow across carbon dioxide separation membrane 33. For example, a membrane containing a carbon dioxide carrier that selectively reacts with carbon dioxide is used as carbon dioxide separation membrane 33. Such a carbon dioxide separation membrane 33 functions as a carbon dioxide facilitated transport membrane that selectively permeates carbon dioxide by a reaction between carbon dioxide and a carbon dioxide carrier.

Note that, since carbon dioxide separation membrane 33 may be a membrane material generally used as the carbon dioxide facilitated transport membrane, detailed description thereof is omitted. However, since the carbon dioxide separation membrane is fitted and bent by frame 14, it is preferable to use a member having stretchability and strength that can withstand the bending.

Similarly to stacked structure 6, in stacked structure 6a according to the modification, the end structures represented by end openings 21b of second frame 14b are alternately formed one by one on first side 20 side or second side 22 side with second frame 14b as a reference, and convex connection portions 29 and concave connection portions 30 are fitted one by one at four corners of frame 14 near through-holes 28.

When stacked structure 6a according to the modification functions as the carbon dioxide separation element, carbon dioxide can be selectively permeated and separated from indoor air flow 4a to outdoor air flow 3a distributed inside the element, and carbon dioxide can be removed from indoor air flow 4a. When an air purification device including stacked structure 6a as the carbon dioxide separation element is configured, an indoor space can be cleaned.

As described above, according to stacked structure 6a according to the modification, the following effects can be obtained.

(1a) In stacked structure 6a, rectangular frames 14 and rectangular carbon dioxide separation membranes 33 are alternately stacked in the up-down direction, and outdoor air ducts 36 and indoor air ducts 37 intersecting with outdoor air ducts 36 in a plan view are alternately formed one by one. In stacked structure 6a, frame 14 includes end opening 21 provided at the end of frame 14 along first sides 20 facing each other in the rectangular shape, and upper projection 23 and lower projection 24 provided at the end of frame 14 along a second sides 22 different from first sides 20 and second sides 22 facing each other in the rectangular shape. Frames 14 are distinctively referred to as second frame 14b, third frame 14c adjacent on the upper side of second frame 14b, and first frame 14a adjacent on the lower side of second frame 14b. In this case, in end opening 21b of second frame 14b, lower projection 24c of third frame 14c is fitted via second heat transfer plate 13b positioned on the upper side adjacent to second frame 14b, and upper projection 23a of first frame 14a is fitted via first heat transfer plate 13a positioned on the lower side adjacent to second frame 14b.

According to such a configuration, upper projection 23a of first frame 14a and lower projection 24c of third frame 14c are fitted to end opening 21b of second frame 14b, and thus, each carbon dioxide separation membrane 33 is caught by upper projection 23 and lower projection 24. Thus, as compared with a case where rib 26 is fixed between upper and lower carbon dioxide separation membranes 33, in a case where an external force is generated in one direction on an outer peripheral surface of stacked structure 6a (in particular, rib 26 disposed on an outer periphery), carbon dioxide separation membrane 33 and frame 14 are less likely to be displaced from each other, and carbon dioxide separation membrane 33 is less likely to be deformed by being protected by frame 14. That is, the strength of stacked structure 6a can be increased. Therefore, in a case where an external force is generated on the outer peripheral surface of stacked structure 6a, it is possible to realize stacked structure 6a capable of suppressing peeling between carbon dioxide separation membrane 33 and frame 14 at the outer peripheral portion and improving sealability.

(2a) In stacked structure 6a, upper projection 23a of first frame 14a and lower projection 24c of third frame 14c are fitted to end opening 21b of second frame 14b, and each carbon dioxide separation membrane 33 is caught by upper projection 23 and lower projection 24.

As a result, since carbon dioxide separation membranes 33 are firmly fixed by three frames 14 in outer peripheral frame bodies 25 of frames 14, it is not necessary to fix between carbon dioxide separation membrane 33 and rib 26 with an adhesive or the like. In other words, stacked structure 6a can be formed even with a combination of members in which it is difficult to fix between carbon dioxide separation membrane 33 and rib 26 by using an adhesive.

(3a) In stacked structure 6a, one of the air ducts intersecting with each other in a plan view is outdoor air duct 36 through which outdoor air flow 3a is distributed, the other of the air ducts intersecting with each other in a plan view is indoor air duct 37 through which indoor air flow 4a is distributed, and carbon dioxide separation membrane 33 is a member that selectively permeates carbon dioxide. Then, stacked structure 6a is used as the carbon dioxide separation element that permeates carbon dioxide from the air (indoor air flow 4a) distributed through indoor air duct 37 to the air (outdoor air flow 3a) distributed through outdoor air duct 36 through carbon dioxide separation membrane 33.

As a result, the strength on the outer peripheral surface is improved, and thus, the carbon dioxide separation element with improved sealability can be realized.

While the present disclosure has been described above based on the exemplary embodiment and the modification, the present disclosure is not limited to the above exemplary embodiment and the modification at all, and it can be easily inferred that various modifications and variations can be made without departing from the gist of the present disclosure.

For example, in stacked structure 6 according to the present exemplary embodiment, convex connection portion 29 is formed on the same side as upper projection 23. The present disclosure is not limited thereto, and for example, convex connection portion 29 may be formed on the same side as lower projection 24 on the opposite side.

Specifically, convex connection portion 29 may be formed in a convex shape on the lower side in the vertical direction from the plane constituted by the plurality of ribs 26, and concave connection portion 30 to which convex connection portion 29 of adjacent frame 14 is fitted may be formed in a concave shape on the lower side in the vertical direction from the plane constituted by the plurality of ribs 26.

Even in this case, vertically adjacent frames 14 can be reliably fixed to each other. That is, it can also be said that each of four corner portions of frame 14 has convex connection portion 29 provided on one surface of frame 14 and protruding upward or downward from the one surface and concave connection portion 30 provided on the other surface positioned on the side opposite to the one surface and fitted with convex connection portion 29 of frame 14 adjacent to frame 14.

As a result, since convex connection portion 29 of frame 14 is fitted to concave connection portion 30 of frame 14 adjacent to frame 14 and concave connection portion 30 of frame 14 is fitted to convex connection portion 29 of another frame 14 adjacent to frame 14, frame 14 and upper and lower frames 14 adjacent to frame 14 can be reliably fixed.

In addition, in stacked structure 6 according to the present disclosure, upper projection 23a of first frame 14a is positioned outside lower projection 24c of third frame 14c in end opening 21b of second frame 14b, but the present disclosure is not limited thereto.

For example, upper projection 23a of first frame 14a may be positioned inside lower projection 24c of third frame 14c in end opening 21 of second frame 14b.

In addition, in stacked structure 6 according to the present disclosure, the position of upper projection 23 is outside the position of lower projection 24 on second side 22 of frame 14, but a positional relationship between the inside and the outside of upper projection 23 and lower projection 24 may be reversed, and there is no difference in the effect.

In addition, in stacked structure 6 according to the present disclosure, a left side portion of end opening 21 of frame 14 positioned in a lowermost layer (a portion to which upper projection 23 is to be fitted) and a right side portion of end opening 21 of frame 14 positioned in an uppermost layer (a portion to which lower projection 24 is to be fitted) are hollow. However, in actual use, all end openings 21 are brought into a state similar to the fitted state by providing a lid on which a protrusion that fills the hollow portion of stacked structure 6 is provided.

### INDUSTRIAL APPLICABILITY

As described above, in the stacked structure according to the present exemplary embodiment, in a case where the external force is generated on the outer peripheral surface of the stacked structure, the peeling between the rib structure and the partition member can be suppressed at the outer peripheral portion, and sealability can be improved. Therefore, it is useful as the heat exchange element used for the heat-exchange-type ventilation device or the like, the carbon dioxide separation element used for the air purification device or the like, or the like.

### REFERENCE MARKS IN THE DRAWINGS

1: house
2: heat-exchange-type ventilation device
3: exhaust air flow
3a: outdoor air flow
4: supply air flow
4a: indoor air flow
5: body case
6: stacked structure
6a: stacked structure
7: air exhaust fan
8: indoor air port
9: exhaust air port
10: air supply fan
11: outdoor air port
12: supply air port
13: heat transfer plate
13a: first heat transfer plate
13b: second heat transfer plate
14: frame
14a: first frame
14b: second frame
14c: third frame
16: exhaust air duct
16a: exhaust air duct
16b: exhaust air duct
16c: exhaust air duct
17: supply air duct
17a: supply air duct
17b: supply air duct
17c: supply air duct
20: first side
21: end opening
21a: end opening
21b: end opening
21c: end opening
22: second side
23: upper projection
23a: upper projection
23b: upper projection
23c: upper projection
24: lower projection
24a: lower projection
24b: lower projection
24c: lower projection
25: outer peripheral frame body
26: rib
26a: rib
26b: rib
26c: rib
27: frame body fixing rod
28: through-hole
29: convex connection portion
29a: convex connection portion
29b: convex connection portion
29c: convex connection portion
30: concave connection portion
30a: concave connection portion
30b: concave connection portion
30c: concave connection portion
33: carbon dioxide separation membrane
36: outdoor air duct
37: indoor air duct
101: heat exchange element
102: single heat exchange element
103: functional paper
104: rib
105: paper string
106: hot melt resin
107: air flow path

## Claims

1. A stacked structure comprising:
a plurality of rib structures; and
a plurality of partition members,
wherein first air ducts and second air ducts intersecting with the first air ducts in a plan view are alternately provided one by one by alternately stacking each of the plurality of rib structures and each of the plurality of partition members in an up-down direction,
the each of the plurality of rib structures includes
a pair of first sides facing each other,
an end opening provided at an end of the each of the plurality of rib structures along each of the pair of first sides,
a pair of second sides facing each other, the second sides being different from the first sides, and
an upper projection and a lower projection provided at the end of the each of the plurality of rib structures along each of the pair of second sides,
the plurality of rib structures include a central rib structure, an upper rib structure adjacent to the central rib structure on an upper side of the central rib structure, and a lower rib structure adjacent to the central rib structure on a lower side of the central rib structure, and
at the end opening of the central rib structure, the lower projection of the upper rib structure is fitted via a partition member positioned on an upper side adjacent to the central rib structure among the plurality of partition members, and the upper projection of the lower rib structure is fitted via a partition member positioned on a lower side adjacent to the central rib structure among the plurality of partition members.

2. The stacked structure according to Claim 1,
wherein the each of the plurality of rib structures includes an outer peripheral frame body including the first sides and the second sides, and a plurality of interval retaining members provided inside the outer peripheral frame body,
the end opening, the upper projection, and the lower projection are provided in the outer peripheral frame body, and
the plurality of interval retaining members extend along the first sides so that predetermined intervals are provided between a partition member adjacent in an up direction and a partition member adjacent in a down direction among the plurality of partition members.

3. The stacked structure according to Claim 1, wherein the upper projection of the lower rib structure is positioned outside the lower projection of the upper rib structure in a plan view in the end opening of the central rib structure.

4. The stacked structure according to Claim 1,
wherein each of four corner portions of the each of the plurality of rib structures includes
a convex connection portion provided on one surface of the each of the plurality of rib structures, the convex connection portion protruding upward or downward from the one surface, and
a concave connection portion provided on an other surface positioned on a side opposite to the one surface of the each of the plurality of rib structures, the concave connection portion being fitted to the convex connection portion of the rib structure adjacent to the each of the plurality of rib structures among the plurality of rib structures.

5. The stacked structure according to any one of Claims 1 to 4,
wherein the first air duct is an exhaust air duct through which an exhaust air flow is distributed,
the second air duct is a supply air duct through which a supply air flow is distributed,
the each of the plurality of partition members is a member having heat conductivity, and
the exhaust air flow and the supply air flow are generated to exchange heat via the each of the plurality of partition members.

6. The stacked structure according to any one of Claims 1 to 4,
wherein the first air duct is an air duct through which an outdoor air is distributed,
the second air duct is an air duct through which an indoor air is distributed,
the each of the plurality of partition members is a member that selectively permeates carbon dioxide, and
the carbon dioxide is permeated from the air distributed through the second air duct to the air distributed through the first air duct via the each of the plurality of partition members.

7. A heat-exchange-type ventilation device comprising
the stacked structure according to any one of Claims 1 to 5 as a heat exchange element.

8. An air purification device comprising
the stacked structure according to any one of Claims 1 to 4 and 6 as a carbon dioxide separation element.
